# EUROPÄISCHE PATENTANMELDUNG

(11) **EP 2 832 238 A2**
(43) Veröffentlichungstag der Anmeldung: **04.02.2015**
(21) Anmeldenummer: 14002631.1
(22) Anmeldetag: 29.07.2014
(51) Int. Cl.: A23L 1/317

(54) **Wurstware**

(30) Priorität: 30.07.2013 AT 2472013
(71) Anmelder: Wiesbauer Österreichische Wurstspezialitäten GmbH, 1230 Wien (AT)
(72) Erfinder: Schmiedbauer, Karl, 1230 Wien (AT)
(74) Vertreter: Itze, Peter

(57) **Zusammenfassung**

Die Erfindung betrifft eine Wurstware enthaltend Rindfleisch und/oder Schweinefleisch so wie Gewürze und/oder Gewürzextrakte. Zwecks Erhöhung der Haltbarkeit und der Geschmacksintensität ist ein Teil des Rindfleisches und/oder Schweinefleisches in Form eines Gulaschs zugesetzt.

## Beschreibung

Die Erfindung betrifft eine Wurstware enthaltend Rindfleisch und/oder Schweinefleisch sowie Gewürze und/oder Gewürzextrakte.

Bekannte handelsübliche Würste oder Wurstwaren dieser Art sind im Regelfall Fleischwürste, worunter gemäß den Angaben im Lebensmittelcodex eine Wurst mit mehr oder weniger grober Körnung (Fleisch- und Speckeinlage) zu verstehen ist.

Bei der Herstellung von Würsten dieser Art werden üblicherweise verschiedene Fleischsorten, mehr oder weniger stark zerkleinert, mit verschiedenen Gewürzen und Salz abgeschmeckt, und unter Zugabe von verschiedenen Zusatz- bzw. Hilfsstoffen, wie Emulgatoren, Konservierungsmittel usw. in natürliche oder künstliche Därme gefüllt und zur Verlängerung der Haltbarkeit geräuchert und/oder gebrüht.

In analoger Weise wird bei Brätwürsten vorgegangen, wobei bei Brätwürsten die Bestandteile entsprechend stark zerkleinert sind.

Um den Nährwert und Geschmack der Würste zu erhöhen, werden den Würsten seit langem andere natürliche Nahrungsmittel, insbesondere pflanzlicher Herkunft, zugesetzt.

Aus AT 12274 U1 geht hervor, eine Wurst der eingangs genannten Art mit rohen Zwiebelstücken zu versetzen, da Zwiebeln einerseits aufgrund der antimikrobiellen Wirkung eine natürliche Alternative zu künstlichen Konservierungsmitteln darstellen und somit die Haltbarkeit der Wurst erhöhen können, sowie andererseits die in Zwiebeln enthaltenen Antioxidantien eine positive Wirkung auf den menschlichen oder Tierischen Organismus besitzen. Da bei dieser bekannten Ausbildung Zwiebel in rohem Zustand zugesetzt wird, ist eine gleichmäßige Verteilung der Bestandteile der Zwiebel nicht gegeben.

Der Erfindung liegt die Aufgabe zugrunde bei einer Wurst der eingangs genannten Art die Haltbarkeit und die Bekömmlichkeit zu verbessern.

Erfindungsgemäß wird diese Aufgabe dadurch gelöst, dass ein Teil des Rindfleisches und/oder Schweinefleisches in Form eines Gulaschs zugesetzt ist. Da ein Gulasch bei der Zubereitung einen hohen Anteil an Zwiebel enthält und die Inhaltstoffe der Zwiebel durch das Kochen in den Saft übergehen, wird eine besonders gute Durchsetzung der Wurstmasse mit den Wirkstoffen der Zwiebel und auch der Gewürze, die einem Gulasch beigesetzt werden, erzielt. Damit wird neben einem entsprechenden Geschmack auch eine erhöhte Haltbarkeit der erfindungsgemäßen Wurst erzielt.

Vorteilhafterweise kann ein weiterer Teil des Rindfleisches und/oder Schweinefleisches zu einer breiigen Bindemasse zerkleinert werden, wobei in dieser Bindemasse der Saftanteil des Gulaschs eine besonders gute Verteilung erfährt. Zusätzlich kann ein noch weiterer Teil des zugesetzten Fleisches als erkennbare Fleischstücke zugesetzt sein, womit der besondere Wurstcharakter erzielt wird. Schließlich kann zum besseren Binden der Masse bei Verwendung von reinem Rindfleisch, fein zerteiltes fettes Schweinefleisch z.B. Schweinegoder, Schweinebacken, zugesetzt sein.

Eine besonders vorteilhafte Wurstzusammensetzung ist gegeben, wenn die Wurst etwa 10-30% Rindfleisch, 20-35% zu Brei zerkleinertes Rindfleisch, 25-40% zu Stücken geschnittenes Rindfleisch und 10-30% Schweinegoder enthält, wobei die Anteile innerhalb der angegebenen Grenzen zur Erzielung von insgesamt 100% variierbar sind. Schließlich kann die Wurstmasse in einen essbaren Kollagendarm gefüllt sein, wobei das Produkt in Heißrauch gegart und danach luftgetrocknet ist.

Bei einem vorteilhaften Verfahren zur Herstellung einer Wurstware der eingangs genannten Art wird zunächst ein herkömmliches Gulasch unter Verwendung von Zwiebel, Paprika und Gewürzen zubereitet, wonach die Fleischstücke in kleine Stücke z.B. etwa 1cm groß, würfelig geschnitten werden, welche dann zusammen mit dem Gulaschsaft mit den übrigen Zutaten vermischt werden, wobei die fertige Mischung in einen essbaren Darm, insbesondere einen Kollagendarm gefüllt wird und wonach schließlich die hergestellten Würste in Heißrauch gegart und luftgetrocknet werden.

Die Erfindung wird nachstehend in Form eines Ausführungsbeispiels noch erläutert.

Die Basis des Brätinhalt enthält ca. 20% Rindgulasch, ca. 27% Rindsbrät aus zerkleinertem Rindfleisch der Klasse II als breiige Masse wobei dieses Brät bereits Gewürze, herkömmliches Kutterhilfsmittel, Salz und der gleichen enthält, ca. 33% Rindfleisch Einwaage, bei welcher Rindfleisch der Kategorie I in etwa würfelige Stücke von einer Größe von 1cm zugesetzt wird und schließlich noch 20% Schweinsgoder oder Schweinebacke n in einer 3mm Körnung enthält.

Zur Bereitung des Gulasch wird in herkömmlicherweise die gewünschte Menge Zwiebel, üblicherweise Zwiebel zu Fleisch im Verhältnis 1 zu 2 bis 1 zu 1, in Fett angedünstet, wobei dann zu den angedünsteten Zwiebeln kleingeschnittenes Rindfleisch zugesetzt wird und die gesamte Masse langsam dünsten gelassen wird. Beim Dünsten gibt sowohl Zwiebel als auch Fleisch Saft ab und das Fleisch wird im eigenen Saft geschmort. Danach werden die Gewürze wie Paprika, Salz, Pfeffer, gegebenenfalls Majoran oder Knoblauch, in gewünschter Menge zugesetzt und eine entsprechende Menge Wasser zugegeben, damit das Fleisch langsam weich dünstet.

Das so hergestellte Gulasch wird dann nach Zerkleinerung der Fleischstücke auf etwa 1cm große Stücke mit dem bereits vorbereiteten Brät aus zerkleinerten Rindfleisch der Kategorie II gemischt und weiters wird noch Rindfleisch der Kategorie I ebenfalls auf 1cm große Teile geschnitten, zugesetzt. Dieser Mischung werden weiteres noch etwa 20% von einem Schweinsgoder zugesetzt und die gesamte Masse gleichmäßig gemischt. Diese so gemischte Masse wird in einen Kollagendarm gefüllt, in Heißrauch gegart und in ca. einer Woche bis zu einem Gewichtsverlust von 35% abgetrocknet, haltbar und essfertig gemacht.

Anstelle des angeführten Beispiels mit Rindfleisch kann auch Schweinefleisch oder eine Mischung aus Rindfleisch und Schweinefleisch eingesetzt werden, wobei die gleichen Schritte bei der Herstellung durchlaufen werden.

## Patentansprüche

1. Wurstware enthaltend Rindfleisch und/oder Schweinefleisch sowie Gewürze und/oder Gewürzextrakte, **dadurch gekennzeichnet, dass** ein Teil des Rindfleisches und/oder Schweinefleisches in Form eines Gulasch zugesetzt ist.

2. Wurstware nach Anspruch 1, **dadurch gekennzeichnet, dass** ein weiterer Teil des Rindfleisches und/oder Schweinefleisches zu einer breiigen Bindemasse zerkleinert ist.

3. Wurstware nach Anspruch 1 oder 2, **dadurch gekennzeichnet, dass** ein noch weiterer Teil als erkennbare Fleischstücke zugesetzt ist.

4. Wurstware nach einem der Ansprüche 1-3, dass bei Verwendung von reinem Rindfleisch der Masse fein zerteiltes fettes Schweinefleisch, z.B. Schweinegoder, Schweinbacken, zugesetzt ist.

5. Wurstware nach einem der Ansprüche 1-4, dass sie folgende Zusammensetzung aufweist, wobei die Anteile innerhalb der angegebenen Grenzen zur Erzielung von insgesamt 100% variierbar sind:
i. 10-30% Rindsgulasch
ii. 20-35% zu Brei zerkleinertes Rindfleisch
iii. 25-40% zu Stücken geschnittenes Rindfleisch
iv. 10-30% Schweinegoder

6. Wurstware nach einem der Ansprüche 1-5, dass die Wurstmasse in einen essbaren Kollagendarm gefüllt ist, wobei das Produkt in Heißrauch gegart und danach luftgetrocknet ist.

7. Verfahren zur Herstellung einer Wurstware nach einem der Ansprüche 1 bis 6, **dadurch gekennzeichnet, dass** ein herkömmliches Gulasch unter Verwendung von Zwiebel, Paprika und Gewürzen zubereitet wird, wonach die Fleischstücke in kleine Stücke, z.B. etwa 1cm groß, geschnitten werden, welche zusammen mit dem Gulaschsaft mit den übrigen Zutaten vermischt werden, die fertige Mischung in einen essbaren Darm, insbesondere Kollagendarm gefüllt wird, und wonach die hergestellten Würste in Heißrauch gegart und luftgetrocknet werden.
